# FASCICULE DE BREVET EUROPEEN

(11) **EP 1 986 482 B1**
(45) Date de publication et mention de la délivrance du brevet: **27.03.2019**
(21) Numéro de dépôt: 08154990.9
(22) Date de dépôt: 23.04.2008
(51) Int. Cl.: H05B 3/02, B60H 1/00, H05K 7/20, H01L 23/34, B60H 1/22

(54) **Dispositif additionnel de chauffage électrique d'un flux d'air constitutif d'une installation de ventilation, chauffage et/ou climatisation d'un véhicule automobile**
Zusatzvorrichtung für die elektrische Erwärmung eines Luftstroms, die zu einer Anlage zur Belüftung, Heizung und/oder Klimatisierung eines Kraftfahrzeugs gehört
Additional device for electrically heating an air flow included in a ventilation, heating and/or air-conditioning installation of an automobile vehicle

(30) Priorité: 27.04.2007 FR 0703108
(43) Date de publication de la demande: 29.10.2008
(73) Titulaire: VALEO SYSTEMES THERMIQUES, 78321 Le Mesnil St Denis Cedex (FR)
(72) Inventeur: Puzenat, Bertrand, 78180 Montigny le Bretonneux (FR); Gatinois, Jean, 78760 Jouars Pontchartrain (FR)
(74) Mandataire: Metz, Gaëlle

(56) Documents cités:
- DE-A1- 19 902 050
- FR-A- 2 794 605
- FR-A- 2 801 467
- FR-A- 2 806 967
- US-A1- 2004 112 884

## Description

### Domaine technique de l'invention.

La présente invention est du domaine des installations de ventilation, de chauffage et/ou de climatisation, notamment d'un véhicule automobile. Elle a pour objet un dispositif additionnel de chauffage électrique d'un flux d'air constitutif d'une telle installation.

### Etat de la technique.

La température de l'air contenu à l'intérieur de l'habitacle d'un véhicule automobile est couramment régulée à partir de la mise en oeuvre d'une installation de ventilation, de chauffage et/ou de climatisation équipant le véhicule. Une telle installation comporte notamment un dispositif additionnel de chauffage électrique, tel qu'un radiateur ou analogue, qui est destiné à réchauffer un flux d'air circulant à son travers, préalablement à la délivrance du flux d'air réchauffé à l'intérieur de l'habitacle. Plus particulièrement, un tel dispositif additionnel est destiné à compléter le traitement thermique dudit flux d'air procuré par un radiateur principal que comporte ladite installation. Ce complément est notamment nécessaire immédiatement après la mise en oeuvre du moteur du véhicule, c'est-à-dire pendant un laps de temps où la puissance calorifique délivrée par le radiateur principal est insuffisante pour procurer le confort thermique désiré par un passager du véhicule.

A cet effet, le dispositif additionnel comprend un corps de chauffe constitué d'une pluralité d'éléments chauffants qui sont disposés dans le flux d'air à réchauffer. Le dispositif additionnel est pourvu d'un dispositif de commande de la mise en oeuvre sélective des éléments chauffants, par exemple en fonction d'une requête de confort thermique déterminée par un passager du véhicule. Le dispositif de commande comporte autant d'interrupteurs électriques que le corps de chauffe comporte d'éléments chauffants, chaque interrupteur électrique étant destiné à autoriser et/ou interdire la mise en oeuvre de l'élément chauffant auquel il est relié. Chaque interrupteur électrique est constitué d'un composant électronique comportant notamment un transistor à effet de champ Métal-Oxyde, couramment dénommé par l'acronyme anglais « MOSFET ». Pour connaître l'environnement technologique de la présente invention, on pourra par exemple se reporter au document DE19728589 (AUDI AG). De plus, le document FR 2 794 605 décrit un dispositif de chauffage thermique selon les caractéristiques du préambule de la revendication 1.

Un problème général posé dans le domaine réside dans le fait qu'un tel interrupteur électrique tend à s'échauffer lors de sa mise en oeuvre, cet échauffement étant susceptible de perturber son fonctionnement et consécutivement celui du dispositif additionnel, jusqu'à finalement procurer au passager un confort thermique inadéquat, notamment par rapport à la requête qu'il a formulé.

### Objet de l'invention.

Le but de la présente invention est de proposer un dispositif de chauffage électrique comprenant un corps de chauffe constitué d'au moins un élément chauffant, dont la mise en oeuvre soit fiable, pérenne et efficace pour réchauffer un flux d'air traversant le corps de chauffe de la manière la plus précise possible par rapport à une requête de réchauffage du flux d'air, ce dispositif étant néanmoins simple à réaliser à partir d'un nombre de pièces le constituant le plus limité possible.

Le dispositif de la présente invention est un dispositif de chauffage électrique comprenant un corps de chauffe traversé par un flux d'air à chauffer et un dispositif de commande de la mise en oeuvre du corps de chauffe. Ledit corps de chauffe comprend au moins un élément chauffant dont la mise en oeuvre est contrôlée par un interrupteur électrique respectif constitutif dudit dispositif de commande. L'interrupteur électrique est relié électriquement à l'élément chauffant correspondant par l'intermédiaire d'un conducteur électrique au moins.

Le conducteur électrique dissipe l'énergie thermique créée par l'interrupteur électrique en échangeant ladite énergie thermique avec le flux d'air à chauffer.
Il en ressort que l'énergie thermique produite par l'interrupteur électrique est évacuée par conduction depuis l'interrupteur électrique vers l'élément chauffant où elle est transmise par convection au flux d'air qui traverse le corps de chauffe. Il en découle une sécurisation du fonctionnement de l'interrupteur électrique, du dispositif de commande et du dispositif de chauffage. Finalement, un tel dispositif de chauffage électrique est à même de délivrer de manière fiable et pérenne un flux d'air à la température requise par le passager. De plus, l'énergie thermique créée par l'interrupteur thermique contribue à réchauffer le flux d'air traversant le corps de chauffe.
Le conducteur électrique est avantageusement constitutif d'un chemin de dissipation de ladite énergie thermique, ledit chemin s'étendant entre l'interrupteur électrique et l'élément chauffant correspondant.
En d'autres termes, le conducteur électrique est avantageusement exploité pour former le chemin de dissipation de l'énergie thermique produite par l'interrupteur électrique vers l'élément chauffant disposé dans le flux d'air à chauffer. Cette exploitation permet d'évacuer ladite énergie thermique à partir de l'utilisation de pièces nécessaires à la mise en oeuvre électrique du dispositif de chauffage, sans ajout de pièces supplémentaires. Il en ressort que la fiabilité d'un tel dispositif de chauffage est accrue sans surcoût de réalisation et sans augmenter la complexité d'assemblage entre elles des pièces constitutives du dispositif de chauffage.

L'interrupteur électrique est placé à l'intérieur du dispositif de commande, c'est-à-dire dans le volume intérieur délimité par le ou les capots qui entourent le dispositif de commande. Comme il n'est pas nécessaire de refroidir directement l'interrupteur électrique, la définition, la mise en oeuvre et la fabrication du dispositif de commande sont facilités puisqu'il n'est pas nécessaire de prévoir des ouvertures et des cheminements d'air, souvent important d'un point du vue dimensionnelle, à l'intérieur et au travers du dispositif de commande. La taille du dispositif de commande est donc plus petite et plus facile à incorporer.
Un autre avantage de l'invention réside dans la possibilité d'utiliser des composants électroniques (l'interrupteur électrique ou électronique) qui n'ont pas besoin de résister aux températures élevées qu'un tel dispositif de commande engendrerait s'il ne comportait pas de conducteur électrique et thermique selon l'invention. Ceci se traduit pas la possibilité d'utiliser des composants moins chèrs.

Selon la présente invention, le chemin de dissipation comporte en outre une piste électrique ménagée sur une face d'une carte de commande, une première borne de l'interrupteur électrique et une première extrémité du conducteur électrique étant rapportées par soudage sur la piste électrique.
Ces dispositions sont telles que l'interrupteur électrique et le conducteur électrique sont soudés sur une même face d'une carte de commande, et plus particulièrement sur une piste électrique ménagée sur cette face. Il en résulte une facilité de mise en oeuvre de la liaison électrique et thermique entre l'interrupteur électrique et l'élément chauffant correspondant. Un tel agencement sur une carte de commande de l'interrupteur électrique est rendu d'autant plus possible que sa liaison électrique avec l'élément chauffant est exploitée pour évacuer l'énergie thermique produite lors de sa mise en oeuvre. En d'autres termes, l'agencement de l'interrupteur thermique sur la carte de commande, qui tendrait normalement à empêcher son refroidissement par convection, n'induit plus d'inconvénient à partir de la mise en oeuvre de la présente invention et plus particulièrement à partir de l'utilisation dudit chemin thermique pour évacuer par conduction ladite énergie thermique.

Selon une première variante de réalisation, un espace résiduel est ménagé entre la première borne de l'interrupteur électrique et la première extrémité du conducteur électrique.

Ces dispositions sont telles que l'interrupteur électrique et le conducteur électrique, et plus particulièrement la première borne de l'interrupteur électrique et la première extrémité du conducteur électrique, ne présentent aucun contact direct l'un avec l'autre. En d'autres termes, la continuité électrique et thermique entre la première borne de l'interrupteur électrique et la première extrémité du conducteur thermique est assurée par la piste électrique. Autrement dit, l'énergie thermique et/ou électrique circule depuis l'interrupteur électrique vers le conducteur électrique nécessairement par l'intermédiaire de la piste électrique.

Selon une deuxième variante de réalisation, la première borne de l'interrupteur électrique et la première extrémité du conducteur électrique sont aboutées l'une à l'autre.

Ces dispositions sont telles que, quelle que soit la nature du contact entre la première borne de l'interrupteur électrique et la première extrémité du conducteur électrique, à savoir à partir d'un contact direct entre elles ou par l'intermédiaire exclusif de la piste électrique, l'énergie thermique produite par l'interrupteur électrique est évacuée vers l'élément chauffant correspondant. Il en résulte finalement qu'il n'est pas nécessaire de maîtriser de façon précise le procédé d'assemblage par soudage de l'interrupteur électrique et du conducteur électrique sur la carte de commande. Il en ressort finalement une relative absence de mise au rebut de dispositif de commande défectueux.

De préférence, une deuxième extrémité du conducteur électrique est reliée à l'élément chauffant correspondant par l'intermédiaire de moyens d'assemblage.

Par exemple, les moyens d'assemblage sont constitués de l'un quelconque de moyens d'assemblage par soudage, de moyens d'assemblage par rivetage ou de moyens d'assemblage par clipage.

Le conducteur électrique est avantageusement constitué d'une languette réalisée en un matériau métallique électriquement et thermiquement conducteur.

L'épaisseur de la languette est préférentiellement de l'ordre de l'épaisseur de la première borne de l'interrupteur électrique.

Ces dispositions sont telles que ladite énergie thermique est évacuée de manière constante et identique par l'intermédiaire du conducteur thermique et par l'intermédiaire de l'interrupteur électrique.

De préférence, le dispositif de commande du corps de chauffe est logé à l'intérieur d'un boîtier de protection.

La deuxième extrémité du conducteur électrique émerge préférentiellement hors du boîtier de protection.

L'interrupteur électrique est notamment principalement constitué d'un transistor à effet de champ Métal-Oxyde.

Un procédé de réalisation d'un tel dispositif de chauffage est principalement reconnaissable en ce qu'il comporte au moins une étape de fusion au cours de laquelle l'interrupteur électrique et le conducteur électrique sont simultanément rapportés par soudage sur une piste électrique d'une carte de commande.

### Description des figures.

La présente invention sera mieux comprise, et des détails en relevant apparaîtront, à la lecture de la description qui va être faite de variantes de réalisation en relation avec les figures des planches annexées, dans lesquelles :
La fig.1 est une vue schématique d'un dispositif de chauffage selon la présente invention.
La fig.2 est une vue schématique partielle en coupe d'une première variante de réalisation du dispositif de chauffage illustré sur la figure précédente.
La fig.3 est une vue schématique partielle en coupe d'une deuxième variante de réalisation du dispositif de chauffage illustré sur la fig.1.
La fig.4 est une vue schématique partielle en perspective du dispositif de chauffage illustré sur la fig.1.

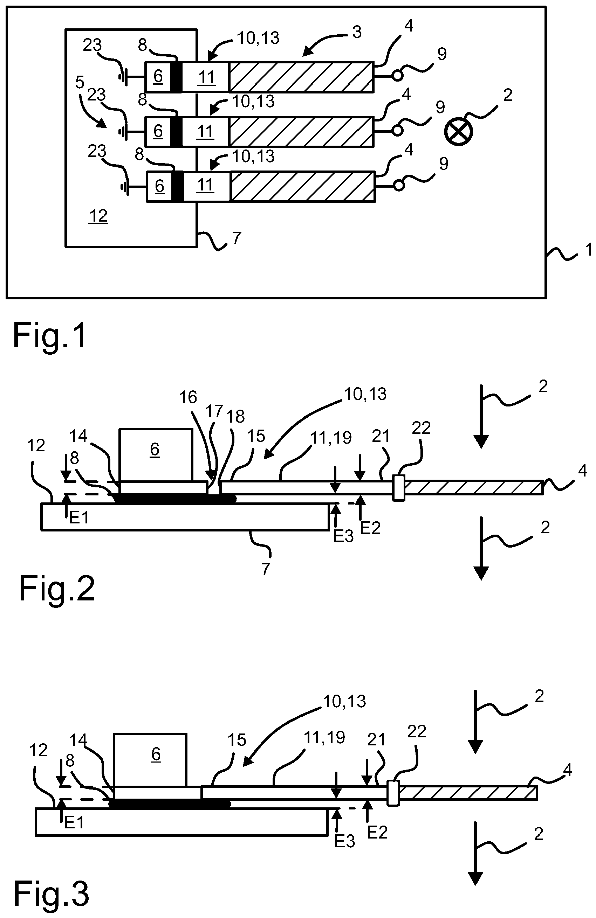

Sur la fig.1, un dispositif additionnel de chauffage électrique 1 d'un flux d'air 2 circulant à l'intérieur d'une installation principale de ventilation, de chauffage et/ou de climatisation équipant un véhicule automobile est principalement destiné à compléter le traitement thermique procuré par un radiateur principal que comporte la dite installation, notamment immédiatement après la mise en marche du moteur du véhicule. En effet, lors du démarrage du véhicule, la puissance calorifique délivrée par le radiateur principal est susceptible d'être insuffisante pour satisfaire une requête d'un passager qui souhaite un réchauffage rapide de l'air présent à l'intérieur de l'habitacle à partir de la délivrance du flux d'air réchauffé par ladite installation. C'est pourquoi il est commun d'équiper une telle installation d'un dispositif additionnel de chauffage électrique 1 du flux d'air 2 préalablement à sa délivrance. On notera cependant que, sans déroger aux règles de la présente invention qui vont être énoncées, le dispositif additionnel de chauffage électrique de la présente invention est susceptible de trouver d'autres applications que celle relative à un complément de traitement thermique d'une telle installation principale, de telles applications nécessitant uniquement un chauffage d'un flux d'air préalablement à sa délivrance à l'intérieur de l'habitacle d'un véhicule.

Le dispositif additionnel de chauffage électrique 1 comprend couramment un corps de chauffe 3 qui est traversé par le flux d'air à réchauffer 2, ce dernier 2 s'écoulant perpendiculairement au plan de la fig.1. Le corps de chauffe 3 est constitué d'une pluralité d'éléments chauffants 4, tels que des résistances, notamment du type résistance à coefficient thermique positif « CTP » ou analogues. Pour permettre une mise en oeuvre graduée du corps de chauffe 3 selon la nature de la requête du passager notamment, le dispositif additionnel de chauffage électrique 1 comprend également un dispositif de commande 5 de la mise en oeuvre sélective des éléments chauffants 4. Le dispositif de commande 5 comporte autant d'interrupteurs électriques 6 que le corps de chauffe 3 comporte d'éléments chauffants 4, au nombre de trois sur l'exemple illustré sur la fig.1. Un interrupteur électrique 6 se trouve alors dédié à la commande d'un seul élément chauffant 4. Ces interrupteurs électriques 6 sont portés par une même face 12 d'une carte de commande 7 qui comporte des pistes électriques 8 sur lesquelles sont rapportés par soudage, par brasage ou analogue, les interrupteurs électriques 6. Un tel interrupteur électrique 6 est principalement constitué d'un transistor à effet de champ Métal-Oxyde, connu sous l'acronyme anglais « MOSFET ».

Selon la nature de la requête du passager, le dispositif de commande 5 autorise une mise sous tension du nombre adéquat d'éléments chauffants 4 à partir d'une mise en oeuvre sélective des interrupteurs électriques correspondants 6. Cette mise sous tension consiste à appliquer une différence de potentiel, couramment de l'ordre de 12 V, entre une borne de masse 23 de l'interrupteur électrique 6 et une borne de tension 9 de l'élément chauffant 4. La mise sous tension est notamment réalisée par l'intermédiaire d'une liaison électrique 10 entre l'élément chauffant 4 et l'interrupteur électrique 6 correspondants, cette liaison électrique 10 comprenant un conducteur électrique 11 et la piste électrique 8.

La mise en oeuvre de l'interrupteur électrique 6 tend à l'échauffer, ce qu'il convient d'éviter pour garantir un bon fonctionnement de l'interrupteur électrique 6, du dispositif de commande 5 et du dispositif de chauffage 1. C'est pourquoi il est avantageusement proposé par la présente invention d'agencer ladite liaison électrique 10 entre l'interrupteur électrique 6 et le conducteur électrique 11 en un chemin de dissipation 13 de l'énergie thermique créé par l'interrupteur électrique 6. L'invention met à profit un élément utilisé habituellement pour conduire le courant électrique de sorte à drainer et conduire une énergie thermique vers une zone ou elle pourra être évacuer ou dissiper.

Le conducteur électrique 11 est apte à dissiper ou dissipe l'énergie thermique créée par l'interrupteur électrique 6 en échangeant ladite énergie thermique avec le flux d'air à chauffer 2 qui traverse les éléments chauffants. On entend par dissiper le fait que ce conducteur électrique draine la puissance calorifique créée par l'interrupteur vers une zone dans laquelle le conducteur électrique 11 peut échanger avec l'air. On comprendra donc qu'il ne s'agit pas d'une conduction thermique purement fortuite mais qu'il s'agit d'utiliser cette conduction pour refroidir l'interrupteur électrique concerné.

La partie du conducteur 11 proche de l'interrupteur (la première extrémité 15) n'échange pas avec l'air car elle est enfermée dans le module de commande. L'aptitude du conducteur électrique 11 à dissiper l'énergie thermique créée par l'interrupteur électrique 6 réside dans le fait qu'il existe une proximité immédiate entre une première borne 14 de l'interrupteur électrique 6 et une extrémité du conducteur électrique 11. Cette proximité est comprise entre 0 mm et 4 mm, avantageusement 1 mm.

Par ailleurs, cette aptitude se trouve améliorée par le fait que le conducteur électrique 11 comprend une première extrémité 15 plate qui présente une longueur de contact avec une piste électrique 8 pratiquée sur le circuit imprimée 7 comprise entre 2 mm et 5 mm, avantageusement 3.85 mm. Le drainage de la puissance calorifique est ainsi amélioré.

Cette aptitude est encore améliorée par le fait que le conducteur électrique 11 qu'il présente une forme aplatie d'épaisseur comprise entre 0.5 et 1.5 mm, d'une largeur comprise entre 7.4 et 8.4 mm et d'une longueur comprise entre 20 mm et 30 mm, avantageusement 24 mm.

En se reportant par ailleurs sur les fig.2 et fig.3, il est remarquable que pour chacun des interrupteurs électriques 6, ledit chemin 13 comprend le conducteur électrique 11 et la piste électrique 8 reliant une première borne 14 de l'interrupteur électrique 6 et la première extrémité 15 du conducteur électrique 11. Ladite première borne 14 est constituée d'une semelle de l'interrupteur électrique 6 qui est rapportée par soudage sur la piste électrique 8. L'épaisseur E1 de la première borne 14 est du même ordre de grandeur que l'épaisseur E2 du conducteur électrique 11, typiquement de l'ordre de 1 mm tandis que l'épaisseur E3 de la piste électrique 8 est de l'ordre de 0,1 mm.

Selon la première variante de réalisation illustrée sur la fig.2, un espace résiduel 16 est ménagé entre la première borne 14 de l'interrupteur électrique 6 et la première extrémité 15 du conducteur électrique 11. Plus précisément, l'espace résiduel 16 s'étendant entre des bords respectifs 17,18 en vis-à-vis de ladite première borne 14 et de ladite première extrémité 15 est d'une dimension de l'ordre de 1 mm.

Selon la deuxième variante de réalisation illustrée sur la fig.3, la première borne 14 de l'interrupteur électrique 6 et la première extrémité 15 du conducteur électrique 11 sont aboutées l'une à l'autre pour faciliter le transfert de ladite énergie thermique depuis l'interrupteur électrique 6 vers le conducteur électrique 11.

Le conducteur électrique 11 est constitué d'une languette 19 réalisée en un matériau électriquement et thermiquement conducteur, tel que du laiton, du cuivre ou analogue. La piste électrique 8 est quant à elle constituée d'une couche de cuivre. Le conducteur électrique 11 est susceptible d'être recouvert d'une couche de nickel pour éviter la création d'un composé intermétallique à base de cuivre et d'étain, lors du soudage du conducteur électrique 11 sur la piste 8. En effet, un tel composé tend à fragiliser la liaison mécanique entre le conducteur électrique 11 et la piste 8.

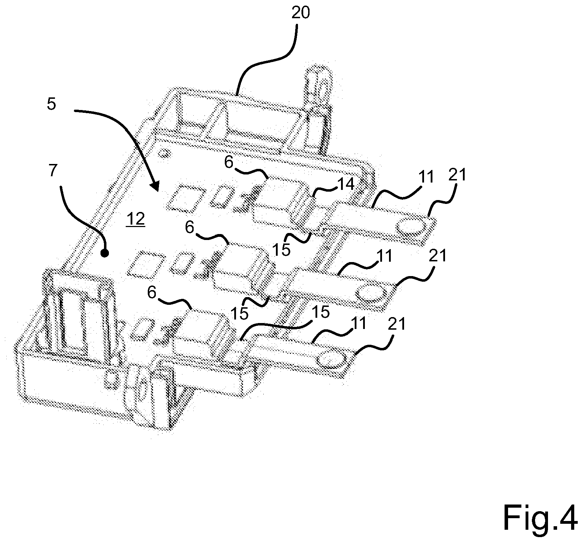

Sur la fig.4, le dispositif de commande 5 est logé à l'intérieur d'un boîtier de protection 20 hors duquel émerge une deuxième extrémité 21 du conducteur électrique 11. Cette dernière 21 est reliée à un élément chauffant respectif 4 par l'intermédiaire de moyens d'assemblage 22, tels que par soudage, rivetage, clipage ou analogue.

On notera que la languette constituant le conducteur électrique 11 est placée dans le prolongement de l'interrupteur électrique 6.

Un tel dispositif de chauffage électrique 1 est avantageusement réalisé à partir de la mise en oeuvre d'un procédé de fusion. Au cours de cette étape réalisée dans un four à une température de l'ordre de 250°C, l'interrupteur électrique 6 et le conducteur électrique 11 sont simultanément soudés sur la piste électrique 8, sans qu'une maîtrise de la dimension de l'espace résiduel 16 soit nécessaire.

On comprend donc qu'une telle manière de refroidir un interrupteur électrique du type MOSFET non soumis à un flux d'air est facile à mettre en oeuvre et ne nécessite pas d'investissement dédié et lourd pour assembler le dispositif de commande.

## Revendications

1. Dispositif de chauffage électrique (1) comprenant un corps de chauffe (3) traversé par un flux d'air à chauffer (2) et un dispositif de commande (5) de la mise en oeuvre du corps de chauffe (3), ledit corps de chauffe (3) comprenant au moins un élément chauffant (4) dont la mise en oeuvre est contrôlée par un interrupteur électrique (6) constitutif dudit dispositif de commande (5), l'interrupteur électrique (6) étant relié électriquement à l'élément chauffant (4) par l'intermédiaire d'un conducteur électrique (11), le conducteur électrique (11) dissipant l'énergie thermique créée par l'interrupteur électrique (6) en échangeant ladite énergie thermique avec le flux d'air à chauffer (2) et le conducteur électrique (11) constituant un chemin de dissipation (13) de ladite énergie thermique, ledit chemin (11) s'étendant entre l'interrupteur électrique (6) et l'élément chauffant (4) correspondant et **caractérisé en ce que** ledit chemin (13) comporte en outre une piste électrique (8) ménagée sur une face (12) d'une carte de commande (7), une première borne (14) de l'interrupteur électrique (6) et une première extrémité (15) du conducteur électrique (11) étant rapportées par soudage sur la piste électrique (8).

2. Dispositif de chauffage électrique selon la revendication 1, **caractérisé en ce qu'**un espace résiduel (16) est ménagé entre la première borne (14) de l'interrupteur électrique (6) et la première extrémité (15) du conducteur électrique (11).

3. Dispositif de chauffage électrique selon la revendication 1, caractérisé en ce la première borne (14) de l'interrupteur électrique (6) et la première extrémité (15) du conducteur électrique (11) sont aboutées l'une à l'autre.

4. Dispositif de chauffage électrique selon l'une quelconque des revendications précédentes, **caractérisé en ce qu'**une deuxième extrémité (21) du conducteur électrique (11) est reliée à l'élément chauffant correspondant (4) par l'intermédiaire de moyens d'assemblage (22).

5. Dispositif de chauffage électrique selon la revendication 4, **caractérisé en ce que** les moyens d'assemblage (22) sont constitués de l'un quelconque de moyens d'assemblage par soudage, de moyens d'assemblage par rivetage ou de moyens d'assemblage par clipage.

6. Dispositif de chauffage électrique selon l'une quelconque des revendications précédentes, **caractérisé en ce que** le conducteur électrique (11) est constitué d'une languette (19) réalisée en un matériau métallique électriquement et thermiquement conducteur.

7. Dispositif de chauffage électrique selon l'une quelconque des revendications précédentes, **caractérisé en ce que** le dispositif de commande (5) du corps de chauffe (3) est logé à l'intérieur d'un boîtier de protection (20).

8. Dispositif de chauffage électrique selon la revendication 7, **caractérisé en ce que** la deuxième extrémité (21) du conducteur électrique (11) émerge hors du boîtier de protection (20).

9. Dispositif de chauffage électrique selon l'une quelconque des revendications précédentes, **caractérisé en ce que** l'interrupteur électrique (6) est principalement constitué d'un transistor à effet de champ Métal-Oxyde.

10. Procédé de réalisation d'un dispositif de chauffage selon l'une quelconque des revendications précédentes, **caractérisé en ce qu'**il comporte au moins une étape de fusion au cours de laquelle l'interrupteur électrique (6) et le conducteur électrique (11) sont simultanément rapportés par soudage sur une piste électrique (8) d'une carte de commande (7).

## Patentansprüche

1. Elektrische Heizvorrichtung (1), die einen von einem zu erwärmenden Luftstrom (2) durchquerten Heizkörper (3) und eine Steuervorrichtung (5) der Benutzung des Heizkörpers (3) enthält, wobei der Heizkörper (3) mindestens ein Heizelement (4) enthält, dessen Benutzung von einem elektrischen Schalter (6) kontrolliert wird, der Bestandteil der Steuervorrichtung (5) ist, wobei der elektrische Schalter (6) über einen elektrischen Leiter (11) elektrisch mit dem Heizelement (4) verbunden ist, wobei der elektrische Leiter (11) die vom elektrischen Schalter (6) erzeugte Wärmeenergie abführt, indem er die Wärmeenergie mit dem zu erwärmenden Luftstrom (2) austauscht, und der elektrische Leiter (11) einen Abführweg (13) der Wärmeenergie bildet, wobei der Weg (11) sich zwischen dem elektrischen Schalter (6) und dem entsprechenden Heizelement (4) erstreckt, **dadurch gekennzeichnet, dass** der Weg (13) außerdem einen Strompfad (8) aufweist, der auf einer Seite (12) einer Steuerkarte (7) angeordnet ist, wobei eine erste Klemme (14) des elektrischen Schalters (6) und ein erstes Ende (15) des elektrischen Leiters (11) durch Schweißen auf den Strompfad (8) aufgebracht sind.

2. Elektrische Heizvorrichtung nach Anspruch 1, **dadurch gekennzeichnet, dass** ein Restzwischenraum (16) zwischen der ersten Klemme (14) des elektrischen Schalters (6) und dem ersten Ende (15) des elektrischen Leiters (11) ausgespart ist.

3. Elektrische Heizvorrichtung nach Anspruch 1, **dadurch gekennzeichnet, dass** die erste Klemme (14) des elektrischen Schalters (6) und das erste Ende (15) des elektrischen Leiters (11) auf Stoß aneinandergefügt sind.

4. Elektrische Heizvorrichtung nach einem der vorhergehenden Ansprüche, **dadurch gekennzeichnet, dass** ein zweites Ende (21) des elektrischen Leiters (11) mit dem entsprechenden Heizelement (4) mittels Montageeinrichtungen (22) verbunden ist.

5. Elektrische Heizvorrichtung nach Anspruch 4, **dadurch gekennzeichnet, dass** die Montageeinrichtungen (22) aus einer beliebigen von Einrichtungen zur Montage durch Schweißen, Einrichtungen zur Montage durch Nieten oder Einrichtungen zur Montage durch Einklinken bestehen.

6. Elektrische Heizvorrichtung nach einem der vorhergehenden Ansprüche, **dadurch gekennzeichnet, dass** der elektrische Leiter (11) aus einer Zunge (19) besteht, die aus einem elektrisch und thermisch leitenden metallischen Material hergestellt ist.

7. Elektrische Heizvorrichtung nach einem der vorhergehenden Ansprüche, **dadurch gekennzeichnet, dass** die Steuervorrichtung (5) des Heizkörpers (3) im Inneren eines Schutzgehäuses (20) untergebracht ist.

8. Elektrische Heizvorrichtung nach Anspruch 7, **dadurch gekennzeichnet, dass** das zweite Ende (21) des elektrischen Leiters (11) aus dem Schutzgehäuse (20) austritt.

9. Elektrische Heizvorrichtung nach einem der vorhergehenden Ansprüche, **dadurch gekennzeichnet, dass** der elektrische Schalter (6) hauptsächlich aus einem Metall-Oxid-Feldeffekttransistor besteht.

10. Verfahren zur Herstellung einer Heizvorrichtung nach einem der vorhergehenden Ansprüche, **dadurch gekennzeichnet, dass** es mindestens einen Schmelzschritt aufweist, während dessen der elektrische Schalter (6) und der elektrische Leiter (11) gleitzeitig durch Schweißen auf einen Strompfad (8) einer Steuerkarte (7) aufgebracht werden.

## Claims

1. Electric heating device (1) including a heating body (3) through which an airflow to be heated (2) flows and a control device (5) for implementing the heating body (3), said heating body (3) comprising at least one heating element (4), the implementation of which is controlled by a constituent electrical switch (6) of said control device (5), the electrical switch (6) being electrically connected to the heating element (4) via an electrical conductor (11), the electrical conductor (11) dissipating the thermal energy produced by the electrical switch (6) by exchanging said thermal energy with the airflow to be heated (2) and the electrical conductor (11) constituting a dissipation pathway (13) for said thermal energy, said pathway (11) extending between the electrical switch (6) and the corresponding heating element (4) and **characterized in that** said pathway (13) further includes an electrical track (8) formed on a face (12) of a control board (7), a first terminal (14) of the electrical switch (6) and a first end (15) of the electrical conductor (11) being attached to the electrical track (8) by welding.

2. Electric heating device according to Claim 1, **characterized in that** a residual space (16) is formed between the first terminal (14) of the electrical switch (6) and the first end (15) of the electrical conductor (11).

3. Electric heating device according to Claim 1, **characterized in that** the first terminal (14) of the electrical switch (6) and the first end (15) of the electrical conductor (11) are butted one against the another.

4. Electric heating device according to any one of the preceding claims, **characterized in that** a second end (21) of the electrical conductor (11) is connected to the corresponding heating element (4) via joining means (22).

5. Electric heating device according to Claim 4, **characterized in that** the joining means (22) consist of any means for joining by welding, means for joining by riveting or means for joining by clip-fastening.

6. Electric heating device according to any one of the preceding claims, **characterized in that** the electrical conductor (11) consists of a tongue (19) made of an electrically and thermally conductive metal material.

7. Electric heating device according to any one of the preceding claims, **characterized in that** the control device (5) for the heating body (3) is housed inside a protective housing (20).

8. Electric heating device according to Claim 7, **characterized in that** the second end (21) of the electrical conductor (11) protrudes from the protective housing (20).

9. Electric heating device according to any one of the preceding claims, **characterized in that** the electrical switch (6) consists primarily of a metal-oxide field-effect transistor.

10. Method for producing a heating device according to any one of the preceding claims, **characterized in that** includes at least one melting step in which the electrical switch (6) and the electrical conductor (11) are simultaneously attached to an electrical track (8) of a control board (7) by welding.
